# EUROPÄISCHE PATENTSCHRIFT

(11) **EP 1 457 714 B1**
(45) Veröffentlichungstag und Bekanntmachung des Hinweises auf die Patenterteilung: **14.02.2007**
(21) Anmeldenummer: 03029850.9
(22) Anmeldetag: 24.12.2003
(51) Int. Cl.: F16H 57/04, B60K 17/08

(54) **Getriebe**
Transmission
Transmission

(30) Priorität: 13.03.2003 DE 10310936
(43) Veröffentlichungstag der Anmeldung: 15.09.2004
(73) Patentinhaber: GKN Walterscheid GmbH, 53797 Lohmar (DE)
(72) Erfinder: Rauschenbach, Stefan, Ing., 02692 Grosspostwitz (DE); Trodler, Dieter, Dipl.-Ing., 02625 Bautzen (DE); Diessner, Gerd, Dipl.-Ing, 02681 Crostau (DE)
(74) Vertreter: Müller, Thomas Michael

(56) Entgegenhaltungen:
- EP-A- 1 253 349
- US-A- 2 106 086
- US-A- 2 619 208
- US-A- 4 025 136

## Beschreibung

Die Erfindung betrifft ein Getriebe, insbesondere ein Motorabtriebsgetriebe für eine selbstfahrende landwirtschaftliche Arbeitsmaschine. Eine Antriebswelle wird von einem Hauptantrieb der Arbeitsmaschine angetrieben und dient unter anderem über eine Antriebsscheibe eines Zugmittelgetriebes zum Antreiben von Arbeitsaggregaten. Bei der Antriebsscheibe kann es sich zum Beispiel um eine Keilriemenscheibe handeln.

Bei bekannten Getrieben dieser Art ist die Antriebswelle in einem Getriebegehäuse gelagert und durch eine Lagerbohrung aus diesem herausgeführt. Hierfür ist in der Regel ein Lager vorgesehen, dass im Getriebegehäuse angeordnet ist, wobei zur Abdichtung eine Radialwellendichtring vorgesehen ist, der in der Lagerbohrung sitzt und dichtend in Anlage zur Antriebswelle steht. Auf dem aus dem Getriebegehäuse auskragenden freien Ende der Antriebswelle oder außen an dem Getriebegehäuse ist eine Riemenscheibe gelagert, wobei die Antriebswelle und die Riemenscheibe über eine schaltbare Kupplung am freien Ende der Antriebswelle miteinander kuppelbar sind. Da die Lager zur Lagerung der Riemenscheibe außerhalb des Getriebegehäuses angeordnet sind, sind diese äußeren Einflüssen und Verschmutzung direkt ausgesetzt. Die Lager sind daher wartungsintensiv und weisen eine geringe Lebensdauer auf.

Die gattungsbildende EP 1 253 349 A1 offenbart ein Getriebe mit einem Getriebegehäuse, dass ein Getriebeinnengehäuse bildet und eine Lagerbohrung aufweist. Ein Wellenabschnitt ist mittels Wälzlager um eine Drehachse drehbar in der Lagerbohrung gelagert. Eine Antriebswelle ist mittels eines zweiten Lagers gegenüber dem Wellenabschnitt gelagert. Eines der ersten Lager ist in einem Ringraum angeordnet, der zum Gehäuse in Raum offen ist. Der Wellenabschnitt ist als Hohlwellenabschnitt gestaltet und weist eine koaxial zur Drehachse angeordnete Bohrung auf.

Ebenso zeigt die Druckschrift US 4 025 136 ein Getriebe nach dem Oberbegriff des Anspruchs 1.

Die US 2 667 048 zeigt einen zylindrischen Stützabschnitt, der eine Lagerbohrung aufweist. In der Lagerbohrung ist ein Wellenabschnitt in Form einer Hohlwelle mittels zweier Kugelrillenlager drehbar gelagert. Der Wellenabschnitt ragt aus der Lagerbohrung heraus und geht an einem freien Ende in einen Flanschabschnitt über. An dem Flanschabschnitt ist eine Antriebsscheibe eines Zugmittelgetriebes drehfest verbunden, welche den Stützabschnitt umgreift. Durch den Wellenabschnitt ist eine Antriebswelle hindurchgeführt, welche am freien Ende des Wellenabschnitts drehfest mit dieser verbunden ist. Die Kugelrillenlager sind innerhalb eines Ringraums in der Lagerbohrung angeordnet, wobei der Ringraum in Richtung zum freien Ende des Wellenabschnitts abgedichtet ist.

Aufgabe der vorliegenden Erfindung ist es, ein Getriebe zu schaffen, das eine Lagerung der Antriebsscheibe auf der Antriebswelle mit hoher Lebensdauer aufweist.

Die Aufgabe wird erfindungsgemäß durch ein Getriebe nach Anspruch 1 gelöst.

Da das zweite Lager in einem Ringraum angeordnet ist, der zum Gehäuseinnenraum hin offen oder mit diesem verbunden ist, ist das zweite Lager in den Schmierverbund des mit Schmiermittel gefüllten Getriebegehäuses integriert. Das zweite Lager ist somit keinen äußeren Einflüssen ausgesetzt. Ferner ist eine permanente Schmierung des zweiten Lagers gewährleistet.

Für eine möglichst gute Abstützung der Antriebsscheibe ist vorgesehen, dass das zweite Lager an einem dem Gehäuseinnenraum entfernt angeordneten Ende der Bohrung vorgesehen ist.

An einem dem Gehäuseinnenraum abgewandten freien Ende der Antriebswelle ist eine Schaltkupplung vorgesehen, mit der die Antriebswelle zur Drehmomentübertragung mit der Antriebsscheibe kuppelbar ist.

Somit gibt es zwei Antriebszustände. In einem ersten Antriebszustand ist die Schaltkupplung eingeschaltet, so dass die Antriebswelle und die Keilriemenscheibe zusammen drehen (Arbeitsstellung). Im zweiten Antriebszustand ist die Schaltkupplung abgeschaltet, so dass sich nur die Antriebswelle dreht, wohingegen die Keilriemenscheibe gegenüber dem Getriebegehäuse stillsteht (Transportstellung).

Die Antriebswelle kann ferner mittels eines dritten Lagers gegenüber dem Getriebegehäuse gelagert sein. Somit ist die Antriebswelle zum einen direkt gegenüber dem Getriebegehäuse und zum anderen über den Wellenabschnitt der Antriebsscheibe mittelbar gegenüber dem Getriebegehäuse gelagert.

Bei der Antriebsscheibe eines Zugmittelgetriebes kann es sich um eine Keilriemenscheibe handeln.

Ferner kann für eine möglichst gute Abstützung der Kräfte, die auf die Antriebsscheibe wirken vorgesehen sein, dass der Wellenabschnitt durch zwei erste Lager in der Lagerbohrung gelagert ist.

In dem Getriebegehäuse können Schmiermittelkanäle vorgesehen sein, die ausgehend vom Gehäuseinnenraum in einen ersten Ringraum, der zwischen einer Innenumfangsfläche der Lagerbohrung und einer Außenumfangsfläche des Wellenabschnitts gebildet ist, zwischen den beiden ersten Lagern mündet. Der erste Ringraum ist hierbei axial in Richtung zum Gehäuseinnenraum durch eine Stauscheibe begrenzt, die zwischen den beiden ersten Lagern angeordnet ist. Das dem Gehäuseinnenraum nahe angeordnete erste Lager ist in einem Ringraum angeordnet, der zum Gehäuseinnenraum offen ist.

In der Lagerbohrung sitzt eine Stauscheibe, die kreisringförmig ausgebildet ist und somit den ersten Ringraum axial begrenzt. Die Stauscheibe sitzt dichtend in der Lagerbohrung und ist derart ausgestaltet, dass sie radial auf die Außenumfangsfläche des Wellenabschnitts zu verläuft. Zwischen Außenumfangsfläche und Stauscheibe ist ein nur schmaler Spalt gebildet, so dass keine Reibung auftritt und Schmiermittel im ersten Ringraum zurückgehalten wird. Der Spalt kann in einem vertikal unteren Bereich schmaler sein als in einem vertikal oberen Bereich. Somit kann bei einem geringen Füllstand des Schmiermittels im ersten Ringraum weniger Schmiermittel durch den Spalt aus dem ersten Ringraum abfließen als bei einem hohen Füllstand. Somit wird bei geringem Füllstand mehr Schmiermittel angestaut, um eine minimale Schmierung zu gewährleisten, wohingegen bei hohem Füllstand mehr Schmiermittel entweichen kann, um das Anstauen von zuviel Schmiermittel zu vermeiden. Vom Gehäuseinnenraum entfernt ist der erste Ringraum ferner durch einen ersten Radialwellendichtring begrenzt. Das dem Schmiermittelkanal entfernt angeordnete erste Lager ist hierbei zwischen der Stauscheibe und dem ersten Radialwellendichtring angeordnet.

Das zweite Lager kann in einem zweiten Ringraum, der zwischen einer Innenumfangsfläche einer Ausnehmung des Wellenabschnitts und einer Außenumfangsfläche der Antriebswelle gebildet ist, angeordnet sein. Hierbei ist für den Transport von Schmiermittel in der Antriebsscheibe mindestens ein Verbindungskanal vorgesehen, der den ersten Ringraum mit dem zweiten Ringraum verbindet. Der zweite Ringraum ist auf der dem Gehäuseinnenraum zugewandten Seite des zweiten Lagers durch eine radial verlaufende Wandung des Wellenabschnitts und auf der dem Gehäuseinnenraum abgewandten Seite des zweiten Lagers durch einen zweiten Radialwellendichtring begrenzt.

Der mindestens eine Verbindungskanal geht von demjenigen Teil des ersten Ringraums aus, der zwischen dem Gehäuseinnenraum abgewandten ersten Lager und dem ersten Radialwellendichtring angeordnet ist. Ferner mündet der mindestens eine Verbindungskanal in denjenigen Teil des zweiten Ringraums, der zwischen dem zweiten Lager und dem zweiten Radialwellendichtring angeordnet ist.

Derjenige Teil des zweiten Ringraums, der zwischen dem zweiten Lager und der radial verlaufenden Wandung des Wellenabschnitts angeordnet ist, ist durch einen Ringspalt mit dem Gehäuseinnenraum verbunden, wobei der Ringspalt zwischen der Bohrung des Wellenabschnitts und der Antriebswelle gebildet ist.

Vorzugsweise sind die ersten Lager in Form von Kegelrollenlagern vorgesehen, wobei diese in O-Anordnung zueinander angeordnet sind. O-Anordnung bedeutet, dass die Kraftwirkungslinien eines Kegelrollenlagers, die die Kraftübertragung vom Innenring über die Wälzkörper auf den Außenring beschreiben, einen Winkel einschließen, der zum jeweilig anderen Kegelrollenlager hin geöffnet ist. Dies hat zum einen den Vorteil, dass eine gute Abstützung gewährleistet ist. Zum anderen weisen Kegelrollenlager einen Pumpeffekt auf, der dafür sorgt, dass Schmiermittel aus dem Raum zwischen den beiden Kegelrollenlagern durch die Kegelrollenlager hindurch nach außen transportiert wird. In der vorliegenden Anordnung wird somit durch dasjenige erste Lager, welches im ersten Ringraum angeordnet ist, Schmieröl von demjenigen Teil des ersten Ringraums, der dem Getriebeinnenraum nahe angeordnet ist, in denjenigen Teil des Ringraums gepumpt, der dem Getriebeinnenraum entfernt angeordnet ist. Somit entsteht im letzten Teil des ersten Ringraums ein Überdruck, so dass durch die Verbindungskanäle Schmiermittel in den zweiten Ringraum gepumpt wird.

In der Arbeitsstellung dreht sich der Wellenabschnitt der Antriebsscheibe gegenüber dem Getriebegehäuse, so dass eine Schmierung des zweiten Lagers durch die Pumpwirkung des Kegelrollenlagers im ersten Ringraum gewährleistet ist. In der Transportstellung steht der Wellenabschnitt gegenüber dem Getriebegehäuse still, so dass keine Pumpwirkung auftritt. In diesem Zustand wird durch die Stauwirkung im ersten Ringraum die Schmiermittelversorgung gewährleistet, da aufgrund der Stauscheibe im ersten Ringraum Schmiermittel angestaut wird und durch die Verbindungskanäle weiter zum zweiten Ringraum fließt.

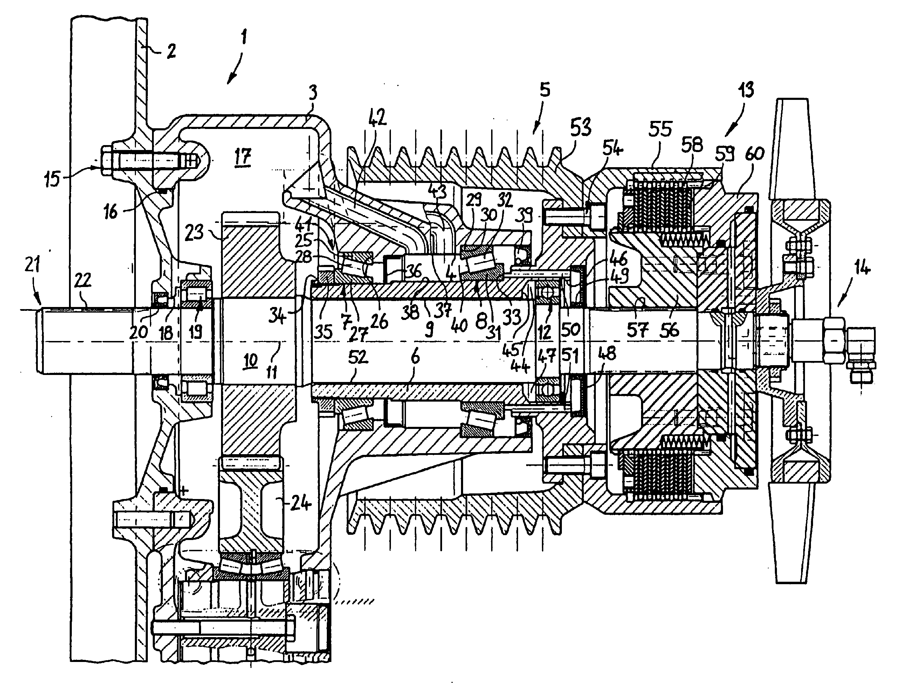

Ein bevorzugtes Ausführungsbeispiel wird im folgenden anhand der Zeichnung näher erläutert.

Die Zeichnung zeigt ein Getriebegehäuse 1, welches durch eine erste Gehäusehälfte 2 und eine zweite Gehäusehälfte 3 gebildet ist. Das Getriebegehäuse 1 weist eine Lagerbohrung 4 auf, in der eine Antriebsscheibe 5 in Form einer Keilriemenscheibe eines Zugmittelgetriebes gelagert ist. Hierzu weist die Antriebsscheibe 5 einen Wellenabschnitt 6 auf, der in die Lagerbohrung 4 hineinragt und mittels zwei erster Lager 7, 8 in Form von Kegelrollenlagern um eine Drehachse 11 drehbar gelagert ist. Der Wellenabschnitt 6 ist als Hohlwellenabschnitt mit einer koaxial zur Drehachse 11 angeordneten Bohrung 9 ausgebildet. Durch die Bohrung 9 ist eine Antriebswelle 10 hindurchgeführt, wobei diese gegenüber dem Wellenabschnitt 6 mittels eines zweiten Lagers 12 in Form eines Rillenkugellagers um die Drehachse 11 drehbar gelagert ist. An einem freien Ende 14 der Antriebswelle 10, welches aus dem Getriebegehäuse 1 herausragt, ist eine Schaltkupplung 13 vorgesehen, mit der die Antriebsscheibe 5 zur Drehmomentübertragung drehfest mit der Antriebswelle 10 gekuppelt werden kann.

Die erste Gehäusehälfte 2 und die zweite Gehäusehälfte 3 sind über Schraubverbindungen 15 miteinander verbunden. Die beiden Gehäusehälften 2, 3 sind über Dichtungen 16 gegeneinander abgedichtet und bilden einen Gehäuseinnenraum 17, der zumindest teilweise mit Schmiermittel gefüllt ist. In der ersten Gehäusehälfte 2 ist eine Bohrung 18 vorgesehen, welche koaxial zur Drehachse 11 angeordnet ist und durch die die Antriebswelle 10 aus dem Gehäuseinnenraum 17 herausgeführt ist. Die Antriebswelle 10 ist ferner mit einem dritter Lager 19 in Form eines Zylinderrollenlagers 19 in der Bohrung 18 gelagert. Auf der vom Gehäuseinnenraum 17 abgewandten Seite des dritten Lagers 19 sitzt ein Axialwellendichtring 20 in der Bohrung 18 und ist in dichtender Anlage zur Antriebswelle 10, so dass an dieser Stelle eine Abdichtung des Gehäuseinnenraums 19 gewährleistet ist. Ein aus der Bohrung 18 geführtes freies Ende 21 der Antriebswelle 10 ist mit einer Längsverzahnung 22 versehen, so dass die Antriebswelle 10 mit einem Antriebsaggregat, wie z.B. der Verbrennungsmaschine einer landwirtschaftlichen Arbeitsmaschine, verbunden werden kann.

In dem Gehäuseinnenraum 17 ist ein Zahnrad 23 vorgesehen, welches drehfest mit der Antriebswelle 10 verbunden ist. Das Zahnrad 23 kämmt mit einem weiteren Zahnrad 24, worüber ein oder mehrere Arbeitsaggregate der Arbeitsmaschine angetrieben werden.

Die beiden ersten Lager 7, 8 für die Lagerung des Wellenabschnitts 6 der Antriebsscheibe 5 sind durch Kegelrollenlager dargestellt, welche in O-Anordnung zueinander angeordnet sind. Der Außenring 25 des dem Gehäuseinnenraum 17 zugewandten ersten Lagers 7 stützt sich hierbei gegen eine Schulter 26, die durch die Lagerbohrung 4 gebildet ist, axial in Richtung zum freien Ende 14 der Antriebswelle 10 ab. Die Kraftwirkungslinien vom Innenring 27 über die Wälzkörper 28 auf den Außenring 25 schließen mit der Drehachse 11 einen Winkel ein, der zum freien Ende 14 hin geöffnet ist.

Das vom Gehäuseinnenraum 17 entfernt angeordnete erste Lager 8 weist einen Außenring 29 auf, der gegen eine Schulter 30 der Bohrung 4 axial in Richtung zum Gehäuseinnenraum 17 abgestützt ist. Hierbei schließen die Kraftwirkungslinien vom Innenring 31 über die Wälzkörper 32 auf den Außenring 29 einen Winkel mit der Drehachse 11 ein, der zum Gehäuseinnenraum 17 hin geöffnet ist. Ferner ist der Innenring 31 des vom Gehäuseinnenraum 17 abgewandten ersten Lagers 8 axial gegen eine Schulter 33 der Antriebswelle 10 in Richtung vom Gehäuseinnenraum 17 weg abgestützt. Die Lagerung, bestehend aus den beiden ersten Lagern 7, 8, lässt sich durch eine Wellenmutter 35, welche auf ein Außengewinde 34 des Wellenabschnitts 6 aufgeschraubt ist, einstellen, wobei sich die Wellenmutter 35 vom Gehäuseinnenraum 17 weg gegen den Innenring 27 des dem Gehäuseinnenraum 17 nahen ersten Lagers 7 abstützt.

In der Lagerbohrung 4 zwischen den beiden ersten Lagern 7, 8 sitzt eine Stauscheibe 36, die kreisringförmig gestaltet ist und ausgehend von einer Innenumfangsfläche 37 der Lagerbohrung 4 radial in Richtung auf eine Außenumfangsfläche 38 des Wellenabschnitts 6 verläuft. Ferner sitzt in der Lagerbohrung 4 ein Axialwellendichtring 39, der auf der von dem Gehäuseinnenraum 17 abgewandten Seite der beiden ersten Lager 7, 8 angeordnet ist. Der Axialwellendichtring 39 ist in dichtender Anlage zur Außenumfangsfläche 38 des Wellenabschnitts 6. Somit ist zwischen der Außenumfangsfläche 38 und der Innenumfangsfläche 37 durch den Axialwellendichtring 39 und die Stauscheibe 36 axial begrenzt ein erster Ringraum 40 gebildet, in dem das vom Gehäuseinnenraum 17 entfernt angeordnete erste Lager 8 angeordnet ist. Das dem Gehäuseinnenraum 17 nahe angeordnete erste Lager 7 ist in einem weiteren Ringraum 41 angeordnet, der zu einer Seite hin durch die Stauscheibe 36 axial begrenzt ist und zur anderen Seite zum Gehäuseinnenraum 17 hin offen ist.

Zur Schmierung des im ersten Ringraum 40 angeordneten ersten Lagers 8 sind Schmiermittelkanäle 42, 43 im Getriebegehäuse 1 vorgesehen. Diese gehen vom Gehäuseinnenraum 17 aus und münden in den ersten Ringraum 40.

An dem dem Gehäuseinnenraum 17 abgewandten Ende des Wellenabschnitts 6 ist eine Ausnehmung 44 in Form einer gegenüber der Bohrung 9 im Durchmesser erweiterten Bohrung vorgesehen, welche eine radial verlaufende Wandung 45 sowie eine Innenumfangsfläche 46 aufweist. Durch diese und durch eine Außenumfangsfläche 49 der Antriebswelle 10 ist ein zweiter Ringraum 47 gebildet, der axial durch einen zweiten Axialwellendichtring 48 abgedichtet ist, der in der Ausnehmung 44 sitzt und in dichtender Anlage zur Außenumfangsfläche 49 der Antriebswelle 10 steht. In dem zweiten Ringraum 47 ist das zweite Lager 12 in Form eines Rillenkugellagers angeordnet. Zur Versorgung des zweiten Lagers 12 mit Schmiermittel sind im Wellenabschnitt 6 parallel zur Drehachse 11 verlaufende Verbindungskanäle 50, 51 vorgesehen, die ausgehend vom ersten Ringraum 40 in den zweiten Ringraum 47 münden. Die Verbindungskanäle 50, 51 gehen hierbei von dem Teil des ersten Ringraums 40 aus, der zwischen dem im ersten Ringraum 40 angeordneten ersten Lager 8 und dem ersten Axialwellendichtring 49 angeordnet ist. Ferner münden die Verbindungskanäle 50, 51 in demjenigen Teil des zweiten Ringraums, der zwischen dem zweiten Lager 12 und dem zweiten Axialwellendichtring 48 gebildet ist. Zwischen der Bohrung 9 des Wellenabschnitts 6 und der Außenumfangsfläche 49 der Antriebswelle 10 ist ein Ringspalt 52 gebildet, der den zweiten Ringraum 47 mit dem Gehäuseinnenraum 17 verbindet. Somit ist ein Schmiermittelkreislauf gebildet, in dem Schmiermittel durch die Schmiermittelkanäle 42, 43 in den ersten Ringraum 40, von dort durch die Verbindungskanäle 50, 51 in den zweiten Ringraum fließen kann und von dort durch den Ringspalt 52 zurück in den Gehäuseinnenraum 17 geführt wird.

Die Antriebsscheibe 5 umfasst neben dem Wellenabschnitt 6 einen Keilriemenring 53, der über Schraubverbindungen 54 mit dem Wellenabschnitt 6 verbunden ist. Der Keilriemenring 53 ist um den Wellenabschnitt 6 koaxial zur Drehachse angeordnet, so dass ein Teil der zweiten Gehäusehälfte 3, der die Lagerbohrung 4 aufweist, zwischen dem Keilriemenring 53 und dem Wellenabschnitt 6 aufgenommen ist. Somit ist eine gute Abstützung der Riemenkräfte, die auf den Keilriemenring 53 wirken, gewährleistet.

Ferner ist über die Schraubverbindung 54 ein Außenteil 55 der Schaltkupplung 13 mit der Antriebsscheibe 5 verbunden. Die Schaltkupplung 13 ist in Form einer Lamellenkupplung dargestellt, wobei ein Innenteil 56 der Schaltkupplung 13 über eine Keilverzahnung 57 mit der Antriebswelle 10 verbunden ist. Außenlamellen 58 sind drehfest mit dem Außenteil 55 und Innenlamellen 59 sind drehfest mit dem Innenteil 56 verbunden und axial abwechselnd hintereinander angeordnet. Mittels eines hydraulisch betätigbaren Kolbens 60 können die Außenlamellen 58 und Innenlamellen 59 in Reibkontakt zueinander gebracht werden, so dass eine drehfeste Verbindung zwischen der Antriebswelle 10 und der Antriebsscheibe 5 gewährleistet ist.

### Bezugszeichenliste

- 1: Getriebegehäuse
- 2: erste Gehäusehälfte
- 3: zweite Gehäusehälfte
- 4: Lagerbohrung
- 5: Antriebsscheibe
- 6: Wellenabschnitt
- 7: erstes Lager
- 8: erstes Lager
- 9: Bohrung
- 10: Antriebswelle
- 11: Drehachse
- 12: zweites Lager
- 13: Schaltkupplung
- 14: freies Ende
- 15: Schraubverbindung
- 16: Dichtung
- 17: Gehäuseinnenraum
- 18: Bohrung
- 19: drittes Lager
- 20: Radialwellendichtring
- 21: freies Ende
- 22: Längsverzahnung
- 23: Zahnrad
- 24: Zahnrad
- 25: Außenring
- 26: Schulter
- 27: Innenring
- 28: Wälzkörper
- 29: Außenring
- 30: Schulter
- 31: Innenring
- 32: Wälzkörper
- 33: Schulter
- 34: Außengewinde
- 35: Wellenmutter
- 36: Stauscheibe
- 37: Innenumfangsfläche
- 38: Außenumfangsfläche
- 39: erster Radialwellendichtring
- 40: erster Ringraum
- 41: Ringraum
- 42: Schmiermittelkanal
- 43: Schmiermittelkanal
- 44: Ausnehmung
- 45: Wandung
- 46: Innenumfangsfläche
- 47: zweiter Ringraum
- 48: zweiter Radialwellendichtring
- 49: Außenumfangsfläche
- 50: Verbindungskanal
- 51: Verbindungskanal
- 52: Ringspalt
- 53: Keilriemenring
- 54: Schraubverbindungen
- 55: Außenteil
- 56: Innenteil
- 57: Keilverzahnung
- 58: Außenlamellen
- 59: Innenlamellen
- 60: Kolben

## Patentansprüche

1. Getriebe umfassend
ein Getriebegehäuse (1), das einen zumindest teilweise mit Schmiermittel gefüllten Gehäuseinnenraum (17) bildet und eine Lagerbohrung (4) aufweist,
einen Wellenabschnitt (6), der mittels mindestens eines ersten Lagers (7, 8) um eine Drehachse (11) drehbar in der Lagerbohrung (4) gelagert ist,
eine Antriebswelle (10), die mittels eines zweiten Lagers (12) gegenüber dem Wellenabschnitt (6) um die Drehachse (11) drehbar gelagert ist,
wobei das mindestens eine erste Lager (7, 8) innerhalb eines Ringraums (41) angeordnet ist, der zum Gehäuseinnenraum (17) hin offen oder mit diesem verbunden ist und
wobei der Wellenabschnitt (6) als Hohlwellenabschnitt mit einer koaxial zur Drehachse (11) angeordneten Bohrung (9) gebildet ist,
**dadurch gekennzeichnet,**
**dass** eine Antriebsscheibe (5) eines Zugmittelgetriebes vorgesehen ist, die den Wellenabschnitt (6) aufweist,
**dass** das zweite Lager (12) innerhalb eines zweiten Ringraums (47) angeordnet ist, der mit dem Gehäuseinnenraum (17) verbunden ist,
**dass** die Antriebswelle (10) durch die Bohrung (9) des Hohlwellenabschnitts aus dem Getriebegehäuse (1) geführt ist,
**dass** das zweite Lager (12) an einem dem Gehäuseinnenraum (17) entfernt angeordneten Ende der Bohrung (9) vorgesehen ist und
**dass** an einem dem Gehäuseinnenraum (17) abgewandten freien Ende (21) der Antriebswelle (10) eine Schaltkupplung (13) vorgesehen ist, mit der die Antriebswelle (10) mit der Antriebsscheibe (5) zur Drehmomentübertragung kuppelbar ist.

2. Getriebe nach Anspruch 1,
**dadurch gekennzeichnet,**
**dass** die Antriebswelle (10) mittels eines dritten Lagers (19) im Getriebegehäuse (1) gelagert ist.

3. Getriebe nach Anspruch 1 oder 2,
**dadurch gekennzeichnet,**
**dass** die Antriebsscheibe (5) eines Zugmittelgetriebes eine Keilriemenscheibe ist.

4. Getriebe nach einem der Ansprüche 1 bis 3,
**dadurch gekennzeichnet,**
**dass** der Wellenabschnitt (6) durch zwei erste Lager (7, 8) in der Lagerbohrung (4) gelagert ist.

5. Getriebe nach Anspruch 4,
**dadurch gekennzeichnet,**
**dass** in dem Getriebegehäuse (1) Schmiermittelkanäle (42, 43) vorgesehen sind, die ausgehend vom Gehäuseinnenraum (17) in einen ersten Ringraum (40), der zwischen einer Innenumfangsfläche (37) der Lagerbohrung (4) und einer Außenumfangsfläche (38) des Wellenabschnitts (6) gebildet ist, zwischen den beiden ersten Lagern (7, 8) mündet.

6. Getriebe nach Anspruch 5,
**dadurch gekennzeichnet,**
**dass** der erste Ringraum (40) axial in Richtung zum Gehäuseinnenraum (17) durch eine Stauscheibe (36) begrenzt ist, die zwischen den beiden ersten Lagern (7, 8) angeordnet ist, und
**dass** das dem Gehäuseinnenraum (17) nahe angeordnete erste Lager (7) in einem Ringraum (41) angeordnet ist, der zum Gehäuseinnenraum (17) hin offen ist.

7. Getriebe nach Anspruch 6,
**dadurch gekennzeichnet,**
**dass** die Stauscheibe (36) in der Lagerbohrung (4) sitzt und kreisringförmig ausgebildet ist.

8. Getriebe nach einem der Ansprüche 5 bis 7,
**dadurch gekennzeichnet,**
**dass** der erste Ringraum (40) vom Gehäuseinnenraum (17) entfernt durch einen ersten Radialwellendichtring (39) begrenzt ist, und
**dass** das dem Schmiermittelkanal entfernt angeordnete erste Lager (8) zwischen der Stauscheibe (36) und dem ersten Radialwellendichtring (39) angeordnet ist.

9. Getriebe nach einem der Ansprüche 4 bis 8,
**dadurch gekennzeichnet,**
**dass** das zweite Lager (12) in einem zweiten Ringraum (47), der zwischen einer Innenumfangsfläche (37) einer Ausnehmung (44) des Wellenabschnitts (6) und einer Außenumfangsfläche (49) der Antriebswelle (10) gebildet ist, angeordnet ist.

10. Getriebe nach Anspruch 9,
**dadurch gekennzeichnet,**
**dass** in der Antriebsscheibe (5) mindestens ein Verbindungskanal (50, 51) für den Transport von Schmiermittel vorgesehen ist, der den ersten Ringraum (40) mit dem zweiten Ringraum (47) verbindet.

11. Getriebe nach Anspruch 10,
**dadurch gekennzeichnet,**
**dass** der zweite Ringraum (47) auf der dem Gehäuseinnenraum (17) zugewandten Seite des zweiten Lagers (12) durch eine radial verlaufende Wandung (45) des Wellenabschnitts (6) und auf der dem Gehäuseinnenraum (17) abgewandten Seite des zweiten Lagers (12) durch einen zweiten Radialwellendichtring (48) begrenzt ist.

12. Getriebe nach Anspruch 11,
**dadurch gekennzeichnet,**
**dass** der mindestens eine Verbindungskanal (50, 51) ausgehend von demjenigen Teil des ersten Ringraums (40), der zwischen dem Gehäuseinnenraum (17) abgewandten ersten Lager (8) und dem ersten Radialwellendichtring (39) angeordnet ist, in denjenigen Teil des zweiten Ringraums (47) mündet, der zwischen dem zweiten Lager (12) und dem zweiten Radialwellendichtring (48) angeordnet ist.

13. Getriebe nach einem der Ansprüche 11 oder 12,
**dadurch gekennzeichnet,**
**dass** derjenige Teil des zweiten Ringraums (47), der zwischen dem zweiten Lager (12) und der radial verlaufenden Wandung (45) des Wellenabschnitts (6) angeordnet ist, durch einen Ringspalt (52), der zwischen der Bohrung (9) des Wellenabschnitts (6) und der Antriebswelle (10) gebildet ist, mit dem Gehäuseinnenraum (17) verbunden ist.

14. Getriebe nach einem der Ansprüche 10 bis 13,
**dadurch gekennzeichnet,**
**dass** die ersten Lager (7, 8) in Form von Kegelrollenlagern vorgesehen sind.

15. Getriebe nach Anspruch 14,
**dadurch gekennzeichnet,**
**dass** die ersten Lager (7, 8) in Form von Kegelrollenlagern in O-Anordnung angeordnet sind.

## Claims

1. A transmission comprising
a transmission housing (1) which forms a housing interior (17) at least partially filled with lubricant and comprises a bearing bore (4);
a shaft portion (6) which, by means of at least one first bearing (7, 8), is rotatably supported around an axis of rotation (1) in the bearing bore (4);
a driveshaft (10) which, by means of a second bearing (12) is rotatably supported relative to the shaft portion (6) around the axis of rotation (11);
wherein the at least one first bearing (7, 8) is arranged inside an annular chamber (41) which opens towards the housing interior (17) or is connected thereto; and
wherein the shaft portion (6) is provided in the form of a hollow shaft portion with a bore (9) arranged coaxially relative to the axis of rotation (11),
**characterised in**
**that** there is provided a driving disc (5) of a traction mechanism drive, which driving disc (5) comprises the shaft portion (6),
**that** the second bearing (12) is arranged inside a second annular chamber (47) which is connected to the housing interior (17),
**that** the driveshaft (10) is guided through the bore (9) of the hollow shaft portion out of the transmission housing (1),
**that** the second bearing (12) is provided at an end of the bore (9), which end is arranged remote from the housing interior (17), and
**that** at a free end (21) of the driveshaft (10), which free end (21) faces away from the housing interior (17), there is provided a switching coupling (13) by means of which the driveshaft (10) can be coupled with the driving disc (5) for torque transmitting purposes.

2. A transmission according to claim 1,
**characterised in**
**that** the driveshaft (10) is supported by a third bearing (19) in the transmission housing (1).

3. A transmission according to claim 1 or 2,
**characterised in**
**that** the driving disc (5) of a traction mechanism drive is a V-belt disc.

4. A transmission according to any one of claims 1 to 3,
**characterised in**
**that** the shaft portion (6) is supported by two first bearings (7, 8) in the bearing bore (4).

5. A transmission according to claim 4,
**characterised in**
**that** in the transmission housing (1), there are provided lubricant channels (42, 43), which, starting from the housing interior (17), end in a first annular chamber (40) between the two first bearings (7, 8) wherein the first annular chamber (40) is formed between an inner circumferential face (37) of the bearing bore (4) and an outer circumferential face (38) of the shaft portion (6).

6. A transmission according to claim 5,
**characterised in**
**that** the first annular chamber (40) is delimited axially in the direction towards the housing interior (17) by a baffle plate (36) which is arranged between the two first bearings (7, 8), and
**that** the first bearing (7) positioned near the housing interior (17) is arranged in an annular chamber (41) which is open towards the housing interior (17).

7. A transmission according to claim 6,
**characterised in**
**that** the baffle plate (36) is positioned in the bearing bore (4) and is circular-ring-shaped.

8. A transmission according to any one of claims 5 to 7,
**characterised in**
**that** the first annular chamber (40) is delimited away from the housing interior (17) by a first radial shaft sealing ring (39), and
**that** the first bearing (8) arranged away from the lubricant channel is arranged between the baffle plate (36) and the first radial shaft sealing ring (39).

9. A transmission according to any one of claims 4 to 8,
**characterised in**
**that** the second bearing (12) is arranged in a second annular chamber (47) which is formed between an inner circumferential face (37) of a recess (44) of the shaft portion (6) and an outer circumferential face (49) of the driveshaft (10).

10. A transmission according to claim 9,
**characterised in**
**that** in the driving disc (5), for transporting lubricant, there is provided at least one connecting channel (50, 51) which connects the first annular chamber (40) to the second annular chamber (47).

11. A transmission according to claim 10,
**characterised in**
**that** the second annular chamber (47), on the side of the second bearing (12) facing the housing interior (17), is delimited by a radially extending wall (45) of the shaft portion (6) and, on the side of the second bearing (12) facing away from the housing interior (17), by a second radial shaft sealing ring (48).

12. A transmission according to claim 11,
**characterised in**
**that** the at least one connecting channel (50, 51), starting from the part of the first annular chamber (40) which is arranged between the first bearing (8) facing away from the housing interior (17) and the first radial shaft sealing ring (39), ends in that part of the second annular chamber (47) which is arranged between the second bearing (12) and the second radial shaft sealing ring (48).

13. A transmission according to any one of claims 11 or 12,
**characterised in**
**that that** part of the second annular chamber (47) which is arranged between the second bearing (12) and the radially extending wall (45) of the shaft portion (6) is connected to the housing interior (17) by an annular gap (52) which is formed between the bore (9) of the shaft portion (6) and the driveshaft (10).

14. A transmission according to any one of claims 10 to 13,
**characterised in**
**that** the first bearings (7, 8) are provided in the form of tapered roller bearings.

15. A transmission according to claim 14,
**characterised in**
**that** the first bearings (7, 8) are arranged in an O-shaped arrangement in the form of tapered roller bearings.

## Revendications

1. Système de transmission comprenant
un carter de transmission (1) qui forme une chambre intérieure de carter (17) remplie au moins partiellement d'un agent de lubrification, et présente un alésage de palier (4),
un tronçon d'arbre (6) qui est monté en rotation autour d'un axe de rotation (11) dans l'alésage de palier (4), au moyen d'au moins un premier palier ou roulement (7, 8),
un arbre d'entraînement (10) qui, au moyen d'un deuxième palier ou roulement (12), est monté rotatif par rapport au tronçon d'arbre (6), autour de l'axe de rotation (11),
ledit au moins un premier palier ou roulement (7, 8) étant disposé à l'intérieur d'une chambre annulaire (41) qui est ouverte vers la chambre intérieure de carter (17) ou est en communication avec celle-ci, et
le tronçon d'arbre (6) étant réalisé en tant que tronçon d'arbre creux présentant un alésage (9) agencé coaxialement à l'axe de rotation (11),
**caractérisé**
**en ce qu'**il est prévu une poulie d'entraînement (5) d'une transmission à moyen de traction, qui comprend le tronçon d'arbre (6),
**en ce que** le deuxième palier ou roulement (12) est disposé à l'intérieur d'une deuxième chambre annulaire (47) qui est communication avec la chambre intérieure de carter (17),
**en ce que** l'arbre d'entraînement (10) sort de manière guidée du carter de transmission (1) à travers l'alésage (9) du tronçon d'arbre creux,
**en ce que** le deuxième palier ou roulement (12) est prévu à une extrémité de l'alésage (9), qui est éloignée de la chambre intérieure de carter (17), et
**en ce qu'**à une extrémité libre (21) de l'arbre d'entraînement (10) éloignée de la chambre intérieure de carter (17), est prévu un embrayage de commande (13) à l'aide duquel l'arbre d'entraînement (10) peut être couplé à la poulie d'entraînement (5) pour la transmission de couple.

2. Système de transmission selon la revendication 1,
**caractérisé**
**en ce que** l'arbre d'entraînement (10) est monté par l'intermédiaire d'un troisième palier ou roulement (19) dans le carter de transmission (1).

3. Système de transmission selon les revendications 1 ou 2,
**caractérisé**
**en ce que** la poulie d'entraînement (5) d'une transmission par moyen de traction est une poulie de courroie trapézoïdale.

4. Système de transmission selon l'une des revendications 1 à 3,
**caractérisé**
**en ce que** le tronçon d'arbre (6) est monté par l'intermédiaire de deux premiers paliers ou roulements (7, 8) dans l'alésage de palier (4).

5. Système de transmission selon la revendication 4,
**caractérisé**
**en ce que** dans le carter de transmission (1) sont prévus des canaux d'agent de lubrification (42, 43) qui, en étant issus de la chambre intérieure de carter (17), débouchent dans une première chambre annulaire (40) qui est formée entre une surface périphérique intérieure (37) de l'alésage de palier (4) et une surface périphérique extérieure (38) du tronçon d'arbre (6), entre les deux premiers paliers ou roulements (7, 8).

6. Système de transmission selon la revendication 5,
**caractérisé**
**en ce que** ladite première chambre annulaire (40) est délimitée axialement en direction de la chambre intérieure de carter (17) par un disque de retenue (36), qui est disposé entre les deux premiers paliers ou roulements (7, 8), et
**en ce que** le premier palier ou roulement (7) disposé à proximité de la chambre intérieure de carter (17), est agencé dans une chambre annulaire (41) ouverte vers la chambre intérieure de carter (17).

7. Système de transmission selon la revendication 6,
**caractérisé**
**en ce que** le disque de retenue (36) est placé dans l'alésage de palier (4) et est de forme annulaire circulaire.

8. Système de transmission selon l'une des revendications 5 à 7,
**caractérisé**
**en ce que** la première chambre annulaire (40) est délimitée du côté éloigné de la chambre intérieure de carter (17), par une première bague d'étanchéité à lèvres (39), et
**en ce que** le premier palier ou roulement (8) en position éloignée du canal d'agent de lubrification, est disposé entre le disque de retenue (36) et la première bague d'étanchéité à lèvres (39).

9. Système de transmission selon l'une des revendications 4 à 8,
**caractérisé**
**en ce que** le deuxième palier ou roulement (12) est disposé dans une deuxième chambre annulaire (47), qui est formée entre une surface périphérique intérieure (37) d'un évidement (44) du tronçon d'arbre (6) et une surface périphérique extérieure (49) de l'arbre d'entraînement (10).

10. Système de transmission selon la revendication 9,
**caractérisé**
**en ce que** dans la poulie d'entraînement (5) est prévu au moins un canal de liaison (50, 51) pour le transport d'agent de lubrification, qui relie ladite première chambre annulaire (40) à ladite deuxième chambre annulaire (47) .

11. Système de transmission selon la revendication 10,
**caractérisé**
**en ce que** la dite deuxième chambre annulaire (47) est délimitée sur le côté du deuxième palier ou roulement (12), dirigé vers la chambre intérieure de carter (17), par une paroi (45) du tronçon d'arbre (6), qui s'étend radialement, et sur le côté du deuxième palier ou roulement (12), éloigné de la chambre intérieure de carter (17), par une deuxième bague d'étanchéité à lèvres (48).

12. Système de transmission selon la revendication 11,
**caractérisé**
**en ce que** ledit au moins un canal de liaison (50, 51) débouche, en partant de la partie de ladite première chambre annulaire (40), qui est disposée entre le premier palier ou roulement (8) éloigné de la chambre intérieure de carter (17) et la première bague d'étanchéité à lèvres (39), dans la partie de ladite deuxième chambre annulaire (47), qui est disposée entre le deuxième palier ou roulement (12) et la deuxième bague d'étanchéité à lèvres (48).

13. Système de transmission selon l'une des revendications 11 ou 12,
**caractérisé**
**en ce que** la partie de ladite deuxième chambre annulaire (47), qui est disposée entre le deuxième palier ou roulement (12) et la paroi (45) d'étendue radiale du tronçon d'arbre (6), est reliée à la chambre intérieure de carter (17) par l'intermédiaire d'un interstice annulaire (52) qui est formé entre l'alésage (9) du tronçon d'arbre (6) et l'arbre d'entraînement (10).

14. Système de transmission selon l'une des revendications 10 à 13,
**caractérisé**
**en ce que** lesdits premiers paliers ou roulements (7, 8) sont prévus sous la forme de roulements à rouleaux coniques.

15. Système de transmission selon la revendication 14,
**caractérisé**
**en ce que** lesdits premiers paliers ou roulements (7, 8) sous la forme de roulements à rouleaux coniques, sont disposés selon un agencement en O.
